# FASCICULE DE BREVET EUROPEEN

(11) **EP 0 945 305 B1**
(45) Date de publication et mention de la délivrance du brevet: **22.01.2003**
(21) Numéro de dépôt: 99400671.6
(22) Date de dépôt: 19.03.1999
(51) Int. Cl.: B60R 1/00

(54) **Système d'antévision par caméra pour véhicule industriel**
Sichtfeld- Erkennungssystem mit Kamera für Nutzfahrzeuge
View recognition system with camera, for industrial vehicle

(30) Priorité: 24.03.1998 FR 9803618
(43) Date de publication de la demande: 29.09.1999
(73) Titulaire: RENAULT VEHICULES INDUSTRIELS, 69800 Saint Priest (FR)
(72) Inventeur: Furnion, Thierry, 69003 Lyon (FR); Nguyen, Hoang Giang, 91130 Ris-Orangis (FR)
(74) Mandataire: Palix, Stéphane

(56) Documents cités:
- US-A- 4 968 124
- US-A- 5 410 346
- US-A- 5 633 705
- PATENT ABSTRACTS OF JAPAN vol. 098, no. 003, 27 février 1998 & JP 09 295539 A (KOKUSAI ELECTRIC CO LTD), 18 novembre 1997
- PATENT ABSTRACTS OF JAPAN vol. 018, no. 098 (M-1562), 17 février 1994 & JP 05 301541 A (FUJITSU LTD), 16 novembre 1993
- "ELECTRONIC BACKSEAT DRIVERS GET AROUND ROADBLOCKS" MACHINE DESIGN, vol. 63, no. 1, 10 janvier 1991, pages 101-103, XP000208104
- PATENT ABSTRACTS OF JAPAN vol. 011, no. 343 (E-555), 10 novembre 1987 & JP 62 122487 A (TOSHIBA CORP), 3 juin 1987
- PATENT ABSTRACTS OF JAPAN vol. 097, no. 009, 30 septembre 1997 & JP 09 128687 A (FUJI HEAVY IND LTD), 16 mai 1997
- PATENT ABSTRACTS OF JAPAN vol. 096, no. 003, 29 mars 1996 & JP 07 304390 A (ICHIKOH IND LTD), 21 novembre 1995
- PATENT ABSTRACTS OF JAPAN vol. 018, no. 589 (M-1701), 10 novembre 1994 & JP 06 219211 A (ISUZU MOTORS LTD), 9 août 1994

## Description

L'invention concerne un système d'antévision par caméra, placé sur un véhicule industriel comme presenté dans le brevet US-A-4928124, destiné à la vision de la partie du véhicule qui se trouve juste devant la cabine de pilotage ainsi qu'à la mesure de la hauteur des ponts situés au-dessus des routes empruntées par les véhicules.

L'antévision sur véhicule industriel est utile au démarrage pour éviter les accidents à l'encontre des piétons et des bicyclettes par exemple. Pendant les phases de manoeuvre, l'antévision permet les manoeuvres fines sans heurter des obstacles. L'antévision ne doit pas être une vision permanente, mais plutôt occasionnelle lors des manoeuvres.

Une autre application très intéressante de l'antévision est la mesure de la hauteur des ponts élevés en travers des routes et des autoroutes du réseau routier et qui constituent un danger potentiel pour les véhicules industriels de grande hauteur. En effet, de nombreux cas de dégradation du véhicule ou de la marchandise transportée, comme des dessous de ponts sont dus à la méconnaissance des hauteurs de ponts.

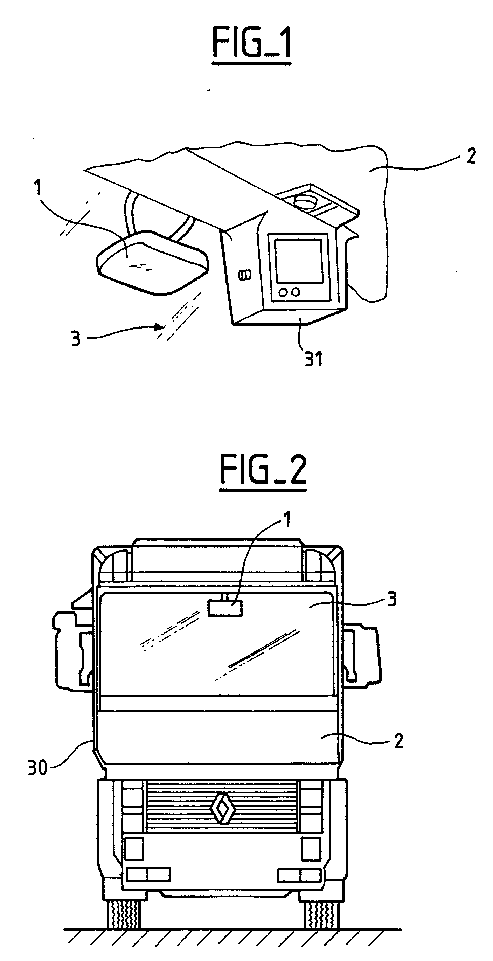

Actuellement, un dispositif d'antévision équipant les véhicules industriels est constitué d'un miroir 1 à surface convexe, fixé à l'extérieur de la cabine de pilotage 2 devant le pare-brise 3 dans une position centrale comme le montrent les figures 1 et 2 qui représentent un miroir d'antévision, respectivement selon une vue de l'intérieur d'une cabine de pilotage d'un véhicule industriel 30 et selon une vue de l'extérieur. Il peut être complété par une caméra de rétrovision située à l'arrière du véhicule associée à un écran de contrôle 31 dans la cabine 2. Le principal inconvénient de cette solution est la présence permanente, dans le champ de vision du conducteur, de l'image de la route obtenue par réflexion dans le miroir.

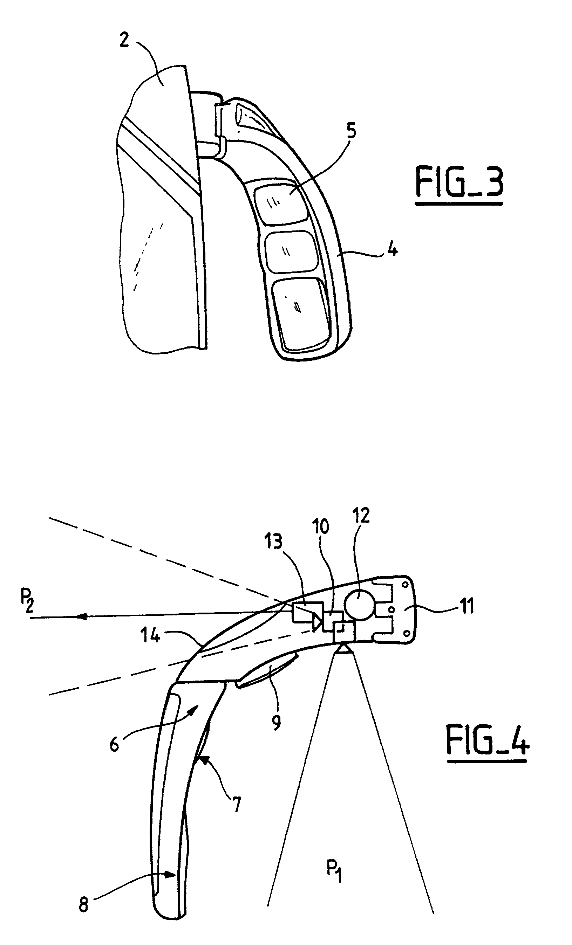

Une autre solution actuelle consiste à équiper un rétroviseur 4 à bras en suspension, de type "dauphin", fixé à l'avant droit de la cabine de pilotage 2, d'un miroir 5 à surface convexe, comme le montre la vue partielle de la cabine de la figure 3. Les inconvénients de cette solution sont l'augmentation du poids total du rétroviseur à bras en suspension ainsi que des vibrations en roulage, qui nécessitent alors des moyens complexes pour les réduire. De plus, l'augmentation du coefficient de frottement aérodynamique total du véhicule, due à l'ajout du miroir, augmente la consommation en carburant du véhicule.

Le but de l'invention est de pallier ces inconvénients en proposant d'implanter une caméra, de type CCD (Charge Coupled Device) ou CMOS (Complementary Metal Oxide Silicium), de petites dimensions, dans un équipement extérieur à la cabine de pilotage, au niveau du coin avant supérieur du pavillon. Cet équipement peut être un rétroviseur à bras en suspension, ou une visière pare-soleil au-dessus du pare-brise, ou bien un boîtier de signalisation extérieure de changement de direction, par feux clignotants.

Pour cela l'objet de l'invention est un système d'antévision pour véhicule industriel doté d'au moins un équipement extérieur à la cabine de pilotage du véhicule, dont une partie au moins dépasse du coin avant supérieur du pavillon, caractérisé en ce qu'il comprend :
- une caméra numérique, intégrée dans l'équipement extérieur, pivotante grâce à un moteur entre deux positions extrêmes, une première position d'antévision destinée à observer la route située juste devant le véhicule et une seconde position de vision frontale destinée à observer les obstacles lointains;
- un écran de visualisation implanté sur la planche de bord de la cabine de pilotage;
- des moyens de détection d'obstacles lointains, situés dans la direction de vision frontale de la caméra, et de mesure de leur distance par rapport au véhicule ;
- une fenêtre transparente optiquement à la longueur d'onde des moyens de détection d'obstacles et de mesure de distance ainsi qu'à celle de la caméra, réalisée à travers l'équipement extérieur dans le champ de vision frontale de la caméra et des moyens de détection;
- un dispositif de commande de la caméra, constitué de moyens d'acquisition des vitesses du véhicule, délivrant deux consignes de vitesse élevée Cₑ et de vitesse nulle Cₙ, et de premiers et seconds moyens de commutation des signaux vidéo.

Selon un premier mode de réalisation, le véhicule industriel est équipé d'au moins un rétroviseur à bras en suspension, fixé sur un des côtés extérieurs de la cabine de pilotage du véhicule par une charnière et comprenant au moins un miroir de rétrovision principale, et le système d'antévision est caractérisé en ce qu'il comprend :
- une caméra numérique, intégrée dans le bras du rétroviseur entre la charnière et le miroir, pivotante grâce à un moteur entre deux positions extrêmes, une première position d'antévision destinée à observer la route située juste devant le véhicule et une seconde position de vision frontale destinée à observer les obstacles lointains;
- un écran de visualisation implanté sur la planche de bord de la cabine de pilotage;
- des moyens de détection d'obstacles lointains, situés dans la direction de vision frontale de la caméra, et de mesure de leur distance par rapport au véhicule ;
- une fenêtre transparente optiquement à la longueur d'onde des moyens de détection d'obstacles et de mesure de distance ainsi qu'à celle de la caméra, réalisée dans le bras du rétroviseur dans le champ de vision frontale de la caméra et des moyens de détection;
- un dispositif de commande de la caméra, constitué de moyens d'acquisition des vitesses du véhicule, délivrant deux consignes de vitesse élevée Cₑ et de vitesse nulle Cₙ, et de premiers et seconds moyens de commutation des signaux vidéo.

Selon un deuxième mode de réalisation, la caméra est intégrée dans une partie d'une visière pare-soleil, située dans le prolongement du pavillon devant le pare-brise, cette partie dépassant latéralement.

Selon un deuxième mode de réalisation, la caméra est intégrée dans un boîtier de feux clignotants dépassant latéralement du coin supérieur de la cabine de pilotage, côté passager.

D'autres caractéristiques et avantages de l'invention apparaîtront à la lecture de la description d'un mode de réalisation, illustrée par les figures suivantes qui, outre les figures 1 à 3 déjà décrites et concernant l'art antérieur, sont :
- la figure 4 : une vue en coupe transversale d'un système d'antévision selon l'invention, logé dans un rétroviseur à bras en suspension ;
- la figure 5 : un schéma de principe d'un système d'antévision selon l'invention.
- la figure 6 : une vue en perspective d'une cabine de pilotage d'un véhicule industriel équipée d'une visière pare-soleil ;
- la figure 7 : une vue en perspective d'une cabine de pilotage d'un véhicule industriel équipée d'un boîtier de signalisation extérieure de changement de direction.

Les éléments portant les mêmes références dans les différentes figures remplissent les mêmes fonctions en vue des mêmes résultats.

Selon l'invention, le véhicule industriel est équipé d'au moins un élément extérieur à la cabine de pilotage du véhicule, dont une partie au moins dépasse du coin avant supérieur du pavillon. Cet équipement extérieur est par exemple un rétroviseur à bras en suspension fixé sur un des côtés extérieurs de la cabine de pilotage, et le système d'antévision pour véhicule industriel est constitué d'une part d'une caméra, de type CMOS ou CCD, implantée dans le rétroviseur et d'un écran de visualisation, de type à cristaux liquides, Liquide Cristal Display (LCD) par exemple, implanté sur la planche de bord de la cabine de pilotage, et d'autre part d'un dispositif de commande.

Comme le montre la vue de la figure 4, en coupe transversale d'un rétroviseur à bras en suspension 6, sont logés dans le bras un miroir 7 de rétrovision grand angle classique, un miroir 8 de rétrovision principale, et un miroir 9 de vision d'accostage classique.

De plus, selon l'invention, il comporte une caméra 10 numérique de type CCD ou CMOS, intégrée dans le bras du rétroviseur 6 entre le miroir 9 de vision d'accostage et la charnière 11 reliant le bras à la cabine de pilotage. Cette caméra 10 peut être pivotée par un moteur 12 assurant sa rotation entre deux positions extrêmes, une première position d'antévision de manière à observer la route située juste devant le véhicule, et une seconde position de vision frontale pour l'observation des obstacles lointains comme des ponts ou des portiques. Pour réaliser la mesure de la hauteur des ponts, la caméra est associée à des moyens 13 de mesure de distance orientés dans la direction de vision frontale de la caméra, tel un laser ou un radar. Enfin, une fenêtre 14 transparente doit être réalisée dans le bras du rétroviseur dans le champ de vision frontale de la caméra et du laser ou du radar. Il s'agit de transparence optique pour le spectre visible de la caméra et de transparence à la longueur d'onde utilisée par le moyen de détection d'obstacle, tel un laser dans le spectre proche infrarouge.

Ce dispositif peut être intégré indifféremment dans le bras de rétrovision de type "dauphin" du côté du conducteur du véhicule, comme du côté de la porte du passager.

La caméra a deux fonctions distinctes. La première est l'antévision, consistant à visualiser, sur l'écran 21, l'espace devant le véhicule industriel que le conducteur ne peut observer directement à cause de sa hauteur par rapport au sol et de son recul par rapport au pare-brise de la cabine de pilotage. La seconde est la vision frontale, devant le véhicule pour les manoeuvres ou le passage sous des ponts en conditions normales de roulage, avec en plus la détection d'obstacles ou de lignes blanches de marquage au sol.

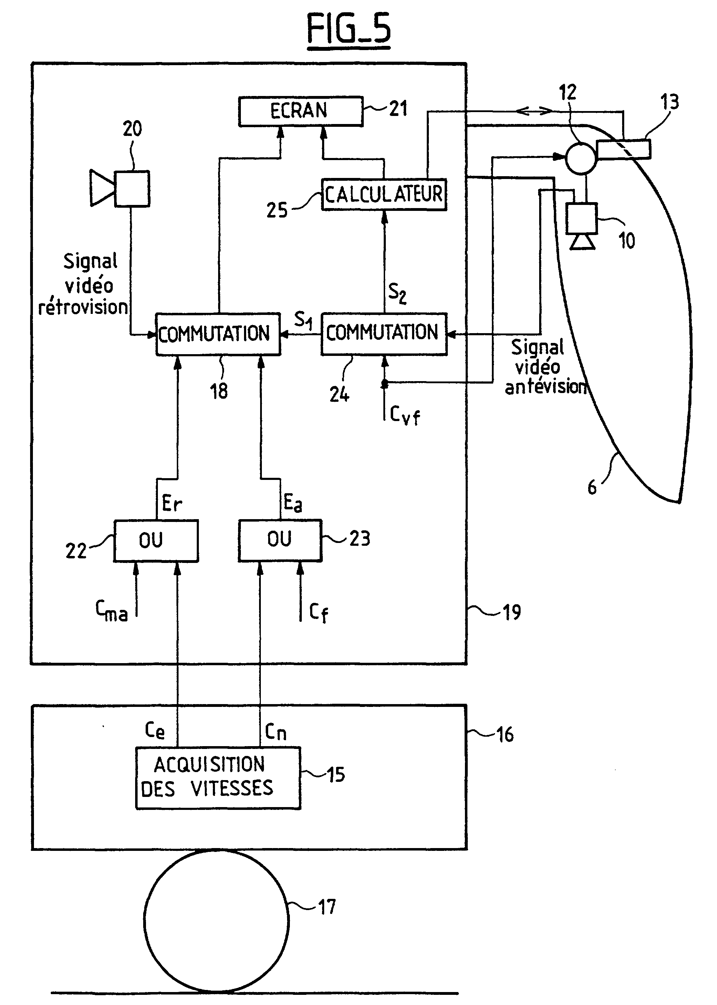

Le dispositif de commande de la caméra se compose d'une part de moyens 15 d'acquisition des vitesses du véhicule, qui peuvent être logés dans le châssis 16 du véhicule, près des roues 17, d'autre part de moyens 18 et 24 de commutation logés dans la cabine 19 de pilotage du véhicule, comme le montre le schéma de principe du système d'antévision selon l'invention de la figure 5.

Les moyens 15 d'acquisition des vitesses sont placés sur le plateau technique situé sous l'habitacle de la cabine 19 sur le châssis 16. A partir d'un capteur de vitesse de roue, de type magnétique à effet Hall ou de type optique par exemple, il délivre des signaux de consigne : un premier signal Cₙ de consigne de vitesse nulle et un second signal Cₑ de consigne de vitesse élevée.

Concernant l'affichage sur l'écran 21 des signaux vidéo provenant de la caméra 10 d'antévision logée dans le rétroviseur extérieur 6, il est forcé tout d'abord quand une consigne Cₙ de vitesse nulle est délivrée par les moyens 15 d'acquisition des vitesses, ou quand le conducteur commande lui-même le positionnement de la caméra 10 en position d'antévision pour voir ce qui est devant sa cabine, en imposant une consigne forcée C_{f}. Dans ces deux cas, la consigne Cₙ de vitesse nulle et la consigne forcée C_{f} sont délivrées, par l'intermédiaire d'un premier circuit logique OU 23, à une première entrée Eₐ de premiers moyens 18 de commutation. Ces moyens 18 de commutation autorisent le passage du signal vidéo issu de la caméra 10 d'antévision, qui transite par la sortie S₁ de seconds moyens 24 de commutation, reliés à la sortie de cette caméra et passe à travers les moyens de commutation 18 pour être affiché sur l'écran 21.

Les signaux vidéo correspondant à la position d'antévision passent en permanence à travers la sortie S₁ des moyens de commutation 24. Excepté dans le cas où le conducteur commande une consigne C_{vf} de visualisation frontale, à partir du tableau de bord, indépendamment de la vitesse du véhicule, dans le but de mesurer la distance et la hauteur des obstacles, avant le passage sous des ponts ou des portiques, et dans ce cas le signal vidéo de la caméra 10 passe à travers la sortie S₂. Cette consigne C_{vf} d'une part fait tourner la caméra 10 d'antévision de 90° grâce au moteur électrique 12 et d'autre part est appliquée en entrée des seconds moyens 24 de commutation pour envoyer, par une sortie S₂, les signaux vidéo vers un calculateur 25 électronique de calcul de distance, relié en sortie à l'écran de visualisation 21. Sur l'écran de visualisation sont affichés de plus les résultats des mesures du calculateur 25, soit la hauteur des ponts par exemple. Le conducteur peut ainsi vérifier si le passage de son véhicule sous un pont ou traversant un portique est sans danger d'accrochage. En l'absence de consigne C_{vf} de visualisation frontale, la caméra 10 reste sur la position d'antévision.

Ce calculateur 25, associé au laser 13 ou à un radar par exemple, calcule la distance entre le véhicule et les ponts placés sur la route en face de lui, ainsi que leur hauteur. Le résultat apparaît sur l'écran de visualisation 21 par incrustation sur l'image de vision frontale. Le calcul de la hauteur des ponts est effectué par le calculateur 25.

Dans le cas où le véhicule industriel est équipé d'une caméra 20 de rétrovision placée par exemple à l'arrière de la remorque du véhicule, les signaux vidéo sont envoyés aux premiers moyens 18 de commutation qui ont pour fonction de commuter l'un ou l'autre de ces signaux vidéo, provenant d'une part de la caméra 10 d'antévision et d'autre part de la caméra 20 de rétrovision, afin de les afficher sur l'écran 21 de visualisation de type LCD par exemple.

Les signaux vidéo provenant de la caméra 20 de rétrovision sont affichés sur l'écran 21 quand une consigne de marche arrière Cₘₐ, délivrée quand le conducteur du véhicule enclenche la vitesse de recul ou marche arrière, ou quand une consigne Cₑ de vitesse élevée, délivrée quand le véhicule est dans les conditions de roulage normales, apparaît sur un deuxième circuit logique OU 22 relié à une deuxième entrée Eᵣ des moyens 18 de commutation.
Les deux entrées de commande de Eᵣ et Eₐ des moyens 18 de commutation sont complémentaires, ne pouvant fonctionner que séparément.

Ainsi, l'affichage de l'image d'antévision sur l'écran de visualisation est occasionnel, notamment quand la vitesse du véhicule est nulle, à l'arrêt dans les carrefours par exemple, ou sur demande du conducteur. Le reste du temps, le même écran affiche l'image de la caméra de rétrovision, à l'arrière de la remorque du véhicule.

La sélection des signaux de visualisation de la caméra d'antévision et de la caméra de rétrovision est effectuée par des consignes de vitesse nulle Cₙ ou de vitesse élevée Cₑ.

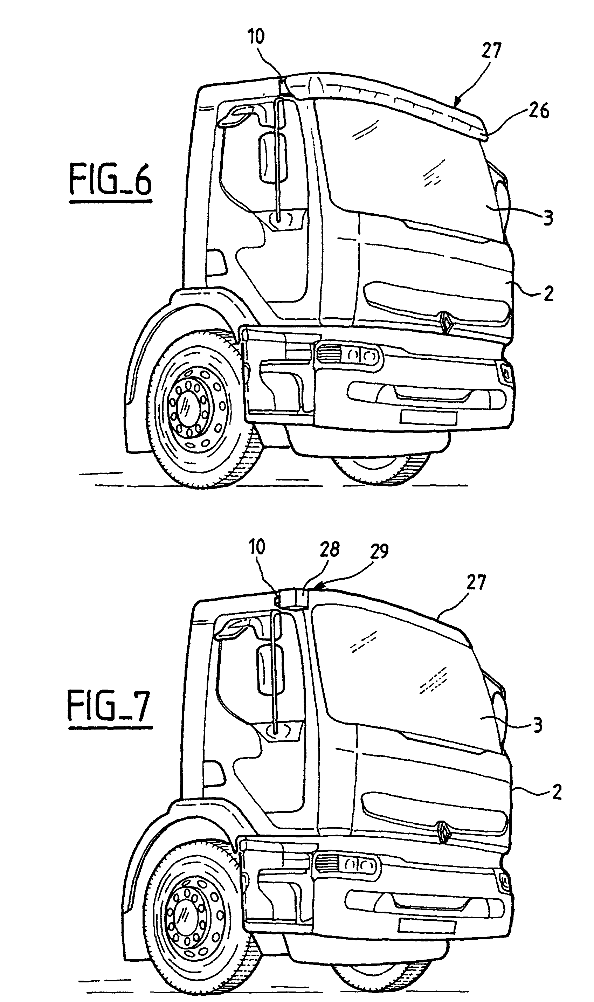

La figure 6 concerne un autre mode de réalisation du système d'antévision, sur un véhicule industriel équipé d'une visière pare-soleil 26, fixée au niveau du pavillon 27 de la cabine de pilotage, devant le pare-brise 3. Cette visière pare-soleil dépasse de part et d'autre de la cabine, dans les limites autorisées par la réglementation, de façon à pouvoir loger une caméra 10 et son moteur 12, ainsi que les moyens de détection 13

La figure 7 concerne un troisième mode de réalisation du système d'antévision, sur un véhicule industriel équipé d'un boîtier 28 de signalisation extérieure de changement de direction, par feux clignotants par exemple. Ce boîtier est fixé au coin supérieur 29 de la cabine de pilotage 2 au niveau du pavillon 27, et dépasse de part et d'autre de la cabine dans les limites autorisées par la réglementation. On y loge donc une caméra 10, son moteur 12 et des moyens de détection 13, tels un laser.

Le système d'antévision selon l'invention réalise une première fonction d'antévision, sans réflexion permanente de l'image de la route dans le champ de vision du conducteur, contrairement aux dispositions classiques à miroir. Il réalise une seconde fonction de vision frontale pour les manoeuvres, avec une mesure de la hauteur des ponts ou des portiques pour les passages en-dessous de ceux-ci, et éventuellement une détection de lignes de marquage au sol ou une détection d'obstacles.

Ce système d'antévision présente l'avantage de ne pas augmenter le poids du rétroviseur à bras en suspension, ni ses vibrations permettant l'obtention d'une image nette. La consommation en carburant du véhicule n'est pas non plus accrue. Enfin, la sécurité en roulage est considérablement améliorée par l'estimation du risque d'accrochage sous les ponts.

## Revendications

1. Système d'antévision pour véhicule industriel doté d'au moins un équipement extérieur à la cabine de pilotage du véhicule, dont une partie au moins dépasse du coin avant supérieur du pavillon, **caractérisé en ce qu'**il comprend :
- une caméra numérique (10), intégrée dans l'équipement extérieur, pivotante grâce à un moteur (12) entre deux positions extrêmes, une première position d'antévision destinée à observer la route située juste devant le véhicule et une seconde position de vision frontale destinée à observer les obstacles lointains;
- des moyens de détection (13) d'obstacles lointains, situés dans la direction de vision frontale de la caméra (10), et de mesure de leur distance par rapport au véhicule, intégrés dans l'équipement extérieur;
- une fenêtre (14) transparente optiquement à la longueur d'onde des moyens de détection d'obstacles et de mesure de distance ainsi qu'à celle de la caméra (10), réalisée à travers l'équipement extérieur dans le champ de vision frontale de la caméra et des moyens de détection;
- un dispositif de commande de la caméra, constitué de moyens (15) d'acquisition des vitesses du véhicule, délivrant deux consignes de vitesse élevée Cₑ et de vitesse nulle Cₙ, et de premiers (18) et seconds (24) moyens de commutation des signaux vidéo ;
- un écran de visualisation (21) implanté sur la planche de bord de la cabine de pilotage.

2. Système d'antévision pour véhicule industriel équipé d'au moins un rétroviseur à bras en suspension, fixé sur un des côtés extérieurs de la cabine de pilotage du véhicule par une charnière et comprenant au moins un miroir de rétrovision principale, selon la revendication 1, **caractérisé en ce que** sont intégrés, dans le bras du rétroviseur (6) entre la charnière (11) et le miroir :
- la caméra (10) numérique, pivotante grâce à un moteur (12) entre deux positions extrêmes, une première position d'antévision destinée à observer la route située juste devant le véhicule et une seconde position de vision frontale destinée à observer et mesurer les obstacles lointains;
- les moyens de détection (13) d'obstacles lointains, situés dans la direction de vision frontale de la caméra (10), et de mesure de leur distance par rapport au véhicule ;
- la fenêtre transparente (14) optiquement à la longueur d'onde des moyens de mesure de distance et de détection d'obstacle ainsi qu'à celle de la caméra (10) réalisée dans le bras du rétroviseur dans le champ de vision frontale de la caméra (10) et des moyens de détection.

3. Système d'antévision pour véhicule industriel équipé d'une visière pare-soleil (26) fixée au niveau du pavillon (27) de la cabine de pilotage (2) du véhicule, devant le pare-brise (3), et dont au moins une partie latérale dépasse de part et d'autre de la cabine, dans les limites autorisées par la réglementation, selon la revendication 1, **caractérisé en ce que** sont intégrés, dans la visière pare-soleil :
- la caméra (10) numérique, pivotante grâce à un moteur (12) entre deux positions extrêmes, une première position d'antévision destinée à observer la route située juste devant le véhicule et une seconde position de vision frontale destinée à observer et mesurer les obstacles lointains;
- les moyens de détection (13) d'obstacles lointains, situés dans la direction de vision frontale de la caméra (10), et de mesure de leur distance par rapport au véhicule ;
- la fenêtre transparente (14) optiquement à la longueur d'onde des moyens de mesure de distance et de détection d'obstacle ainsi qu'à celle de la caméra (10) réalisée dans la visière dans le champ de vision frontale de la caméra (10) et des moyens de détection.

4. Système d'antévision pour véhicule industriel équipé d'un boîtier (28) de signalisation extérieure de changement de direction, par feux clignotants, fixé au coin supérieur (29) au niveau du pavillon (27) de la cabine de pilotage (2) du véhicule, du côté opposé au conducteur, et dépassant de part et d'autre de la cabine, dans les limites autorisées par la réglementation, selon la revendication 1, **caractérisé en ce que** sont intégrés, dans le boîtier:
- la caméra (10) numérique, pivotante grâce à un moteur (12) entre deux positions extrêmes, une première position d'antévision destinée à observer la route située juste devant le véhicule et une seconde position de vision frontale destinée à observer et mesurer les obstacles lointains;
- les moyens de détection (13) d'obstacles lointains, situés dans la direction de vision frontale de la caméra (10), et de mesure de leur distance par rapport au véhicule ;
- la fenêtre transparente (14) optiquement à la longueur d'onde des moyens de mesure de distance et de détection d'obstacle ainsi qu'à celle de la caméra (10) réalisée dans le boîtier dans le champ de vision frontale de la caméra (10) et des moyens de détection.

5. Système d'antévision pour véhicule industriel selon l'une des revendication 1 à 4, **caractérisé en ce que** le dispositif de commande de la caméra (10) d'antévision comprend des premiers moyens (18) de commutation reliés à une sortie (S₁) de seconds moyens (24) de commutation recevant en entrée les signaux vidéo issus de la caméra d'antévision, et **en ce que** les signaux vidéo issus de la caméra (10) d'antévision sont affichés sur l'écran de visualisation (21) quand les premiers moyens (18) de commutation reçoivent une consigne de vitesse nulle (Cₙ) ou une consigne forcée (C_{f}) par l'intermédiaire d'un circuit logique OU (23), ou bien quand les seconds moyens (24) de commutation reçoivent une consigne (C_{vf}) de visualisation frontale, indépendante de la vitesse du véhicule, destinée à visualiser également la hauteur des obstacles.

6. Système d'antévision pour véhicule industriel selon l'une des revendications 1 à 4, **caractérisé en ce que** les moyens de détection des obstacles lointains, situés en avant du véhicule, et de mesure de leur distance par rapport au véhicule sont constitués d'une part d'un laser (13) ou d'un radar, orienté dans la direction de vision frontale de la caméra (10), et d'autre part d'un calculateur électronique (25) destiné à évaluer la distance et la hauteur des obstacles.

7. Système d'antévision pour véhicule industriel selon l'une des revendications 1 à 6, **caractérisé en ce que** le véhicule est équipé de plus d'une caméra (20) de rétrovision arrière, associée au même écran (21) de visualisation que la caméra (10) d'antévision, et dont les signaux vidéo sont envoyés sur les premiers moyens (18) de commutation, qui autorisent leur visualisation sur l'écran (21) quand ils reçoivent, par l'intermédiaire d'un circuit logique OU (22), une consigne (Cₑ) de vitesse élevée en phase de roulage du véhicule ou une consigne (Cₘₐ) de marche arrière délivrée par l'enclenchement de la vitesse de recul par le conducteur.

8. Système d'antévision pour véhicule industriel selon la revendication 1, **caractérisé en ce que** la caméra d'antévision (10) est numérique de type "Charge Coupled Device" (CCD) ou de type "Complementary Metal Oxyde Silicium" (CMOS).

9. Système d'antévision pour véhicule industriel selon la revendication 1, **caractérisé en ce que** l'écran (21) de visualisation est de type à cristaux liquides LCD.

## Patentansprüche

1. System zur Vorausbeobachtung für einen Lastwagen, der mit mindestens einem ausserhalb der Fahrerkabine des Fahrzeugs angeordneten Ausrüstungsteil versehen ist, von dem wenigstens ein Abschnitt aus der oberen vorderen Ecke des Kabinenoberteils herausragt, **dadurch gekennzeichnet, dass** es aufweist:
- eine digitale Kamera (10), die in das aussen angeordnete Ausrüstungsteil integriert ist und die mittels eines Motors (12) verschwenkbar ist zwischen zwei Endstellungen, einer ersten Stellung der Vorausbeobachtung in der sie den unmittelbar vor dem Fahrzeug befindlichen Strassenabschnitt beobachtet und einer zweiten Stellung der Voraussicht, in der sie weit entfernte Hindernisse beobachtet;
- eine Anordnung (13) zur Feststellung der weit entfernten Hindernisse, die sich in Richtung der nach vorn gerichteten Voraussicht der Kamera (10) befinden und zur Messung ihres Abstandes vom Fahrzeug, die in das aussen angeordnete Ausrüstungsteil integriert ist;
- ein für die Wellenlänge der Anordnung zur Feststellung von Hindernissen und für die Messung des Abstandes sowie für diejenige der Kamera (10) optisch transparentes Fenster (14), das das aussen angeordnete Ausrüstungsteil quer durchsetzt im Gesichtsfeld der Voraussicht der Kamera und der Feststellanordnung;
- eine Vorrichtung zur Steuerung der Kamera, bestehend aus einer Anordnung (15) zur Erfassung der Geschwindigkeit des Fahrzeuges, die ein Stellsignal der erhöhten Geschwindigkeit Cₑ und ein Stellsignal der Geschwindigkeit Null Cₙ erzeugt, sowie aus einer ersten (18) und aus einer zweiten (24) Anordnung zur Umschaltung der Videosignale;
- einen Bildschirm (21), der in das Armaturenbrett der Fahrerkabine eingesetzt ist.

2. System zur Vorausbeobachtung für einen Lastwagen, der mit mindestens einem Rückblickspiegel mit Aufhängearm versehen ist, der an einer der Aussenseiten der Fahrerkabine des Fahrzeuges über ein Scharnier befestigt ist und der wenigstens einen Hauptspiegel für den Blick nach hinten aufweist nach Anspruch 1, **dadurch gekennzeichnet ist, dass** in den Aufhängearm des Rückblickspiegels (6) zwischen dem Scharnier (11) und dem Spiegel die folgenden Teile integriert sind:
- die digitale Kamera (10), die mittels eines Motors (12) verschwenkbar ist zwischen zwei Endstellungen, einer ersten Stellung der Vorausbeobachtung, in der sie den unmittelbar vor dem Fahrzeug befindlichen Strassenabschnitt beobachtet und einer zweiten Stellung der Voraussicht, in der sie weit entfernt liegende Hindernisse beobachtet;
- die Anordnung (13) zur Feststellung der weit entfernten Hindernisse, die sich in Richtung der nach vorn gerichteten Voraussicht der Kamera (10) befinden und zur Messung ihres Abstandes vom Fahrzeug;
- das für die Wellenlänge der Anordnung zur Feststellung von Hindernissen und für die Messung des Abstandes sowie für diejenige der Kamera (10) optisch transparente Fenster (14), das in den Arm des Rückblickspiegels eingesetzt ist im Gesichtsfeld der Voraussicht der Kamera (10) und der Feststellanordnung.

3. System zur Vorausbeobachtung für einen Lastwagen, der mit einer Sonnenblende (26) versehen ist, die auf Höhe des Daches (27) der Fahrerkabine (2) des Fahrzeuges vor der Windschutzscheibe (3) angeordnet ist, wobei wenigstens einer ihrer Abschnitte seitlich über die Kabine hinaus ragt in den durch die Bestimmungen festgelegten Grenzen nach Anspruch 1, **dadurch gekennzeichnet, dass** in die Sonnenblende die folgenden Teile integriert sind:
- die digitale Kamera (10), die mittels eines Motors (12) verschwenkbar ist zwischen zwei Endstellungen, einer ersten Stellung der Vorausbeobachtung, in der sie den unmittelbar vor dem Fahrzeug befindlichen Strassenabschnitt beobachtet und einer zweiten Stellung der Voraussicht, in der sie weit entfernt liegende Hindernisse beobachtet;
- die Anordnung (13) zur Feststellung der weit entfernten Hindernisse, die sich in Richtung der nach vorn gerichteten Voraussicht der Kamera (10) befinden und zur Messung ihres Abstandes vom Fahrzeug;
- das für die Wellenlänge der Anordnung zur Feststellung von Hindernissen und für die Messung des Abstandes sowie für diejenige der Kamera (10) optisch transparente Fenster (14), das in die Sonnenblende eingesetzt ist im Gesichtsfeld der Voraussicht der Kamera (10) und der Feststellanordnung.

4. System zur Vorausbeobachtung für einen Lastwagen, der mit einem aussen angeordneten Gehäuse (28) für eine Anzeige zur Änderung der Fahrtrichtung in Form eines Blinkers versehen ist, das an der oberen Ecke (29) auf Höhe des Daches (27) der Fahrerkabine (2) des Fahrzeuges auf der dem Fahrer gegenüber liegenden Seite vorgesehen ist und das über die Kabine seitlich hinaus ragt in den durch die Bestimmungen festgelegten Grenzen nach Anspruch 1, **dadurch gekennzeichnet, dass** in das Gehäuse die folgenden Teile eingesetzt sind:
- die digitale Kamera (10), die mittels eines Motors (12) verschwenkbar ist zwischen zwei Endstellungen, einer ersten Stellung der Vorausbeobachtung, in der sie den unmittelbar vor dem Fahrzeug befindlichen Strassenabschnitt beobachtet und einer zweiten Stellung der Voraussicht, in der sie weit entfernt liegende Hindernisse beobachtet;
- die Anordnung (13) zur Feststellung der weit entfernten Hindernisse, die sich in Richtung der nach vorn gerichteten Voraussicht der Kamera (10) befinden und zur Messung ihres Abstandes vom Fahrzeug;
- das für die Wellenlänge der Anordnung zur Feststellung von Hindernissen und für die Messung des Abstandes sowie für diejenige der Kamera (10) optisch transparente Fenster (14), das in das Gehäuse eingesetzt ist im Gesichtsfeld der Voraussicht der Kamera (10) und der Feststellanordnung.

5. System zur Vorausbeobachtung für einen Lastwagen nach einem der Ansprüche 1 bis 4, **dadurch gekennzeichnet, dass** die Vorrichtung zur Steuerung der Kamera (10) für die Vorausbeobachtung eine erste Umschaltanordnung (18) aufweist, die mit einem Ausgang (S₁) einer zweiten Umschaltanordnung (24) verbunden ist, deren Eingang die von der Kamera (10) für die Vorausbeobachtung stammenden Videosignale zugeführt werden und dass die von der Kamera (10) für die Vorausbeobachtung stammenden Videosignale auf dem Bildschirm (21) dargestellt werden, wenn die erste Umschaltanordnung (18) ein Stellsignal für die Geschwindigkeit Null (Cₙ) empfängt oder ein vorrangiges Stellsignal (C_{f}) von einer logischen ODER-Schaltung (23) oder auch wenn die zweite Umschaltanordnung (24) ein Stellsignal der Voraussicht (C_{vf}) empfängt, unabhängig von der Geschwindigkeit des Fahrzeuges, das dazu dient, auch die Höhe der Hindernisse bildlich darzustellen.

6. System zur Vorauseobachtung für einen Lastwagen nach einem der Ansprüche 1 bis 4, **dadurch gekennzeichnet, dass** die Anordnung zur Feststellung der weit entfernten Hindernisse, die im Vorderteil des Fahrzeuges angeordnet ist, und zur Messung ihres Abstandes vom Fahrzeug einerseits aus einem Laser (13) oder einem Radargerät besteht, der bzw. das in Richtung der Voraussicht der Kamera (10) ausgerichtet ist, und andererseits aus einem elektronischen Rechner (25) besteht zur Berechnung des Abstandes und der Höhe der Hindernisse.

7. System zur Vorausbeobachtung für einen Lastwagen nach einem der Ansprüche 1 bis 6, **dadurch gekennzeichnet, dass** das Fahrzeug ausserdem mit einer rückwärtigen Rückblickkamera (20) versehen ist, die demselben Bildschirm (21) zugeordnet ist wie die Kamera (10) für die Vorausbeobachtung und deren Videosignale der ersten Umschaltanordnung (18) zugeführt werden, die ihre Darstellung auf dem Bildschirm (21) freigibt, wenn sie von einer logischen ODER-Schaltung (22) ein Stellsignal der erhöhten Geschwindigkeit (Cₑ) während der Normalfahrt des Fahrzeuges oder ein Stellsignal für die Rückwärtsfahrt (Cₘₐ) empfängt, das durch das Einlegen des Rückwärtsganges erzeugt wird.

8. System zur Vorausbeobachtung für einen Lastwagen nach Anspruch 1, **dadurch gekennzeichnet, dass** die Kamera (10) für die Beobachtung eine digitale "Charge Coupled Device" (CCD)-Kamera oder eine "Complementary Metal Oxyde Silicium" (CMOS)-Kamera ist.

9. System zur Vorauseobachtung für einen Lastwagen nach Anspruch 1, **dadurch gekennzeichnet, dass** der Bildschirm (21) ein Flüssigkristalle aufweisender LCD-Bildschirm ist.

## Claims

1. Forward view system for a commercial vehicle provided with at least one item of equipment outside the driver's cab of the vehicle, at least part of which extends beyond the upper front corner of the roof, **characterized in that** it comprises:
- a digital camera (10), incorporated into the external equipment item, pivoting by virtue of a motor (12) between two extreme positions, a first forward view position for observing the road located just in front of the vehicle and a second front view position for observing distant obstacles;
- means (13) for detecting distant obstacles, located in the front view direction of the camera (10), and for measuring their distance from the vehicle, incorporated into the external equipment;
- a window (14) which is optically transparent at the wavelength of the means for detecting obstacles and for measuring distance and at the wavelength of the camera (10), produced through the external equipment item in the front field of vision of the camera and of the detection means;
- a device for controlling the camera, consisting of means (15) for acquiring vehicle speeds, delivering two values, one for high speed Cₑ and one for zero speed Cₙ, and first (18) and second (24) means of switching video signals;
- a display screen (21) fitted in the dashboard of the driver's cab.

2. Forward view system for a commercial vehicle equipped with at least one suspension-arm rear view mirror, fastened to one of the external sides of the driver's cab of the vehicle by a hinge and comprising at least one main rear view mirror, according to Claim 1, **characterized in that** the following are incorporated, into the arm of the rear view mirror (6) between the hinge (11) and the mirror:
- the digital camera (10) pivoting by virtue of a motor (12) between two extreme positions, a first forward view position for observing the road located just in front of the vehicle and a second front view position for observing distant obstacles;
- the means (13) for detecting distant obstacles, located in the front view direction of the camera (10), and for measuring their distance from the vehicle;
- the window (14) which is optically transparent at the wavelength of the means for measuring distance and for detecting obstacles and at that of the camera (10), produced in the arm of the rear view mirror in the front field of vision of the camera (10) and of the detection means.

3. Forward view system for a commercial vehicle equipped with a sunvisor (26) fastened to the roof (27) of the driver's cab (2) of the vehicle, in front of the windscreen (3), and at least a side part of which extends beyond either side of the cab, within the limits authorized by the regulations, according to Claim 1, **characterized in that** the following are incorporated into the sunvisor:
- the digital camera (10) pivoting by virtue of a motor (12) between two extreme positions, a first forward view position for observing the road located just in front of the vehicle and a second front view position for observing and measuring the distance of distant obstacles;
- the means (13) for detecting distant obstacles, located in the front view direction of the camera (10), and for measuring their distance from the vehicle;
- the window (14) which is optically transparent at the wavelength of the means for measuring distance and for detecting obstacles and at that of the camera (10), produced in the visor in the front field of vision of the camera (10) and of the detection means.

4. Forward view system for a commercial vehicle equipped with an external box (28) for signalling a change of direction, by means of indicators, fastened to the upper corner (29) at the roof (27) of the driver's cab (2) of the vehicle, on the side away from the driver, and extending beyond either side of the cab, within the limits authorized by the regulations, according to Claim 1, **characterized in that** the following are incorporated in the box:
- the digital camera (10) pivoting by virtue of a motor (12) between two extreme positions, a first forward view position for observing the road located just in front of the vehicle and a second front view position for observing distant obstacles;
- the means. (13) for detecting distant obstacles, located in the front view direction of the camera (10), and for measuring their distance from the vehicle;
- the window (14) which is optically transparent at the wavelength of the means for measuring distance and for detecting obstacles and at that of the camera (10), produced in the box in the front field of vision of the camera (10) and of the detection means.

5. Forward view system for a commercial vehicle according to one of Claims 1 to 4, **characterized in that** the device for controlling the forward view camera (10) comprises first switching means (18) connected to an output (S₁) of second switching means (24) receiving the video signals from the forward view camera as an input, and **in that** the video signals from the forward view camera (10) are displayed on the display screen (21) when the first switching means (18) receive a zero speed value (Cₙ) or a fourth value (C_{f}) via an OR logic circuit (23), or else when the second switching means (24) receive a front display value (C_{vf}), independent of the speed of the vehicle, for also displaying the height of the obstacles.

6. Forward view system for a commercial vehicle according to one of claims 1 to 4, **characterized in that** the means for detecting distant obstacles, located in the front of the vehicle, and for measuring their distance from the vehicle, consists on the one hand of a laser (13) or of radar, oriented in the front view direction of the camera (10), and on the other hand of an electronic computer (25) for calculating the distance and the height of the obstacles.

7. Forward view system for a commercial vehicle according to one of Claims 1 to 6, **characterized in that** the vehicle is further equipped with a rear view camera (20), associated with the same display screen (21) as the forward view camera (10), and whose video signals are sent to the first switching means (18), which authorize their display on the screen (21) when they receive, via an OR logic circuit (22), a high speed value (Cₑ) in the driving phase of the vehicle or a reversing value (Cₘₐ) delivered when the reverse gear is engaged by the driver.

8. Forward view system for a commercial vehicle according to Claim 1, **characterized in that** the forward view camera (10) is a digital camera of the "Charge Coupled Device" (CCD) type or of the "Complementary Metal Oxide Silicon" (CMOS) type.

9. Forward view system for a commercial vehicle according to Claim 1, **characterized in that** the display screen (21) is of the liquid crystal LCD type.
